# FASCICULE DE BREVET EUROPEEN

(11) **EP 0 766 882 B1**
(45) Date de publication et mention de la délivrance du brevet: **09.09.1998**
(21) Numéro de dépôt: 95917871.6
(22) Date de dépôt: 12.05.1995
(51) Int. Cl.: H02K 3/12, H02K 15/06

(54) **SECTION DE CONDUCTEUR POUR UNE ARMATURE DE STATOR D'UNE MACHINE DYNAMOELECTRIQUE POLYPHASEE**
LEITER FÜR EINEN STATOR EINER MEHRPHASIGEN DYNAMOELEKTRISCHEN MASCHINE
STATOR CORE CONDUCTOR SECTION FOR A POLYPHASE DYNAMO-ELECTRIC MACHINE

(30) Priorité: 23.06.1994 US 264504
(43) Date de publication de la demande: 09.04.1997
(73) Titulaire: HYDRO-QUEBEC, Montréal Québec H2Z 1A4 (CA)
(72) Inventeur: COUTURE, Pierre, Boucherville, Québec J4B 4A4 (CA); FRANCOEUR, Bruno, Beloeil, Québec J3G 6M1 (CA); LANGLOIS, André, Granby, Québec J2G 7X8 (CA); LEDUC, Jacques, Saint-Mathieu-de-Beloeil, Québec J3G 2C9 (CA); REIHER, Stéphane, Sainte-Julie, Québec J3E 1M8 (CA); SVOBODA, Jan, Ste-Julie, Québec J3E 2C5 (CA)
(74) Mandataire: Thébault, Jean-Louis
(86) Numéro de dépôt international: CA9500284
(87) Numéro de publication internationale: WO9600460

(56) Documents cités:
- FR-A- 2 244 284
- FR-A- 2 430 123
- GB-A- K11 896
- GB-A- 545 101
- GB-A- 2 079 194
- US-A- 1 658 300
- US-A- 1 721 636
- US-A- 3 453 468
- PATENT ABSTRACTS OF JAPAN vol. 006, no. 067 (E-104), 28 Avril 1982 & JP,A,57 009 248 (TOSHIBA CORP) 18 Janvier 1982

## Description

La présente invention concerne un stator d'une machine dynamoélectrique et une méthode pour monter au moins un enroulement de stator sur une armature de stator de forme cylindrique. Plus spécifiquement, l'invention concerne une machine dynamoélectrique qui peut être un moteur ou une génératrice.

La machine peut être munie d'un rotor interne ou d'un rotor externe. Plus spécifiquement, l'invention concerne des enroulements de stator ayant des conducteurs de section rectangulaire.

Il existe dans l'art antérieur le brevet américain N° 3,453,468 délivré le 1^{er} juillet 1979 à W.W. Lund. Ce brevet montre un enroulement à deux couches pour l'armature de stator d'une machine dynamoélectrique. Cet enroulement consiste en une pluralité de bobines dans lequel toutes les bobines d'un groupe de phase sont branchées en série et formées à partir d'un seul conducteur continu, chaque bobine consistant en un seul tour. La section du conducteur est rectangulaire de manière à ce que les encoches rectangulaires de l'armature du stator puissent être presque complètement remplies, ce qui n'est pas le cas avec l'utilisation d'un conducteur de section cylindrique. L'inconvénient avec la machine décrite par Lund est que les têtes de chaque tour faisant partie du conducteur et formant un pont d'une encoche à une autre sont relativement grosses et longues par rapport à l'armature du stator. Ce type de têtes rend la machine lourde et occasionne des pertes de chaleur supplémentaires plus particulièrement dans le cas d'une machine à pas polaire petit par rapport au rayon de la machine.

Le brevet français No. 2,430,123 décrit un enroulement à deux ou plus de deux couches formé de brins de conducteur torsadés pour machines électriques. Un inconvénient avec l'enroulement décrit dans ce brevet est qu'il est fait de brins torsadés qui ne permettent pas un bon facteur de remplissage des encoches du stator. Le brevet français No. 2,244,284 décrit un enroulement d'induit pour démarreurs électriques. Un inconvénient avec l'enroulement décrit dans ce brevet est que chaque spire de l'enroulement est de section circulaire. Cela ne permet pas un bon facteur de remplissage des encoches du stator.

Le brevet britannique No. 11,896 décrit des bobinages asymétriques d'une machine électrique sans montrer la méthode d'assemblage de ces bobinages sur l'armature de stator.

Dans l'art antérieur, il existe également les brevets américains suivants:
693,578
3,675,058
3,914,860
4,321,497
4,346,320
5,056,922

Un inconvénient avec tous les brevets mentionnés ci-dessus est qu'aucun de ces brevets présente un stator pour une machine dynamoélectrique montrant des enroulements d'un conducteur de section rectangulaire, faits d'une pluralité de tours branchés en série, et dont chaque tour a des têtes substantiellement petites par rapport à l'armature du stator.

Un objet de la présente invention est de proposer un stator pour une machine dynamoélectrique ayant des enroulements de conducteur de section rectangulaire où les têtes des tours des enroulements du stator sont plus petites que celles décrites dans l'art antérieur de façon à ce que la machine dynamoélectrique soit plus légère et dégage moins de chaleur en opération.

Un autre objet de la présente invention est de proposer une méthode pour monter au moins un enroulement de stator sur une armature de stator de forme cylindrique d'une machine dynamoélectrique.

La présente invention vise une section de conducteur pour une armature de stator d'une machine dynamoélectrique polyphasée, l'armature de stator étant munie d'une série d'encoches parallèles allongées pour recevoir respectivement des sections de conducteur, la section de conducteur comprenant deux côtés parallèles de conducteur de section substantiellement rectangulaire adaptés pour être logés respectivement dans les encoches parallèles correspondantes de l'armature de stator, les deux côtés définissant un plan, et au moins une tête de conducteur de section substantiellement rectangulaire, reliant deux extrémités adjacentes des deux côtés parallèles, la tête ayant des surfaces opposées supérieure et inférieure, la section de conducteur étant caractérisée en ce que:

la tête présente un corps substantiellement en forme de U selon une vue de dessus perpendiculaire audit plan, et un corps ondulé selon une vue de face contenu dans ledit plan, la surface supérieure faisant face seulement à un côté du plan et la surface inférieure faisant face seulement au côté opposé du plan.

La présente invention vise également une méthode pour monter des sections de conducteur d'un enroulement de stator sur une armature de stator de forme cylindrique d'une machine dynamoélectrique, chacune des sections de conducteur ayant deux côtés parallèles de conducteur et au moins une tête de conducteur reliant deux extrémités adjacentes desdits deux côtés parallèles, ladite armature de stator étant munie d'encoches parallèles distribuées de façon circonférentielle, la méthode étant caractérisée en ce qu'elle comprend des étapes où:
a) on positionne de façon circonférentielle chacune des sections de conducteur par rapport à l'armature de stator de façon que pour chacune desdites sections, un premier côté de conducteur fait face directement à une des encoches, et un second côté de conducteur est disposé à une position éloignée par rapport à l'armature de stator;
b) après l'étape (a), on insère chacun des premiers côtés de conducteur dans l'encoche correspondante; et
c) on insère chacun des seconds côtés de conducteur dans une autre desdites encoches, qui a déjà reçu un premier côté de conducteur d'une autre section de conducteur, jusqu'à ce que tous les côtés soient montés dans lesdites encoches.

La présente invention vise également une méthode pour monter des sections de conducteur d'un enroulement de stator sur une armature de stator de forme cylindrique d'une machine dynamoélectrique, chacune des sections de conducteur ayant deux côtés parallèles de conducteur et au moins une tête de conducteur reliant deux extrémités adjacentes des deux côtés parallèles, ladite armature de stator étant munie d'encoches parallèles distribuées de façon circonférentielle, la méthode étant caractérisée en ce qu'elle comprend des étapes où:
a) on insère un premier côté de conducteur de chaque section de conducteur partiellement dans une encoche correspondante desdites encoches parallèles;
b) on positionne un second côté de conducteur de chaque section de conducteur, un à côté de l'autre, le long de l'armature de stator;
c) après les étapes (a) et (b), on décale de façon circonférentielle les seconds côtés de conducteur par rapport à l'armature de stator jusqu'à ce que les seconds côtés de conducteur soient alignés respectivement avec les premiers côtés de conducteur pour former des paires de côtés de conducteur alignés; et
d) après l'étape (c), on applique une force sur les seconds côtés de conducteur selon une direction radiale de ladite armature de stator cylindrique pour insérer les paires de côtés de conducteur alignés complètement dans les encoches correspondantes.

Les objets, avantages et autres caractéristiques de la présente invention seront plus détaillés à la lecture de la description non limitative qui suit de modes de réalisations préférentiels donnés à titre d'exemples seulement en référence aux dessins ci-joints.
La figure 1 est une vue de dessus d'une section de conducteur selon la présente invention;
la figure 2 est une vue en perspective de la section de conducteur montrée à la figure 1;
la figure 3 est une vue de côté de la section de conducteur montrée à la figure 1;
la figure 4 est une vue de dessus d'une tête de conducteur de la section de conducteur montrée aux figures 1, 2 et 3;
la figure 5 est une vue de face de la tête de conducteur montrée à la figure 4;
la figure 6 est une vue de côté de la tête de conducteur montrée aux figures 4 et 5;
la figure 7 est une vue partielle et en perspective d'une pluralité de sections de conducteur en combinaison avec une armature de stator selon la présente invention;
la figure 8 est une vue de face de la pluralité de sections de conducteur en combinaison avec l'armature de stator, montrées à la figure 7;
la figure 9 est une vue en perspective d'une autre section de conducteur selon la présente invention;
la figure 10 est une autre vue en perspective de la section de conducteur montrée à la figure 9;
la figure 11 est une vue de dessus d'une tête de conducteur de la section de conducteur montrée aux figures 9 et 10;
la figure 12 est une vue de face de la tête de conducteur montrée à la figure 11;
la figure 13 est une vue de face en partie et en perspective d'une pluralité de sections de conducteur en combinaison avec une armature de stator selon la présente invention;
la figure 14 est une vue de derrière de la pluralité de sections de conducteur montrées à la figure 13;
la figure 15 est une vue de face de la pluralité de sections de conducteur montrées à la figure 13;
la figure 16 est une vue en perspective en explosion d'un moule en deux parties avec une section de conducteur selon la présente invention;
la figure 17 est un circuit électrique montrant les branchements d'une pluralité de sections de conducteur;
les figures 18, 19, 20 et 21 sont des vues schématiques de côté et en partie de sections de conducteur par rapport à une armature de stator, montrant les différentes étapes d'une méthode pour monter des sections de conducteur sur une armature de stator de forme cylindrique;
les figures 22, 23, 24 et 25 sont des vues schématiques de côté et en partie montrant des sections de conducteur par rapport à une armature de stator, illustrant les étapes d'une autre méthode pour monter les sections de conducteur sur une armature de stator de forme cylindrique;
la figure 26 est une vue en perspective montrant l'extrémité d'une section de conducteur selon la présente invention;
la figure 27 est une vue partielle de dessus d'une armature de stator munie de sections de conducteur; et
la figure 28 est une vue en perspective et en partie de ce qui est montré à la figure 27.

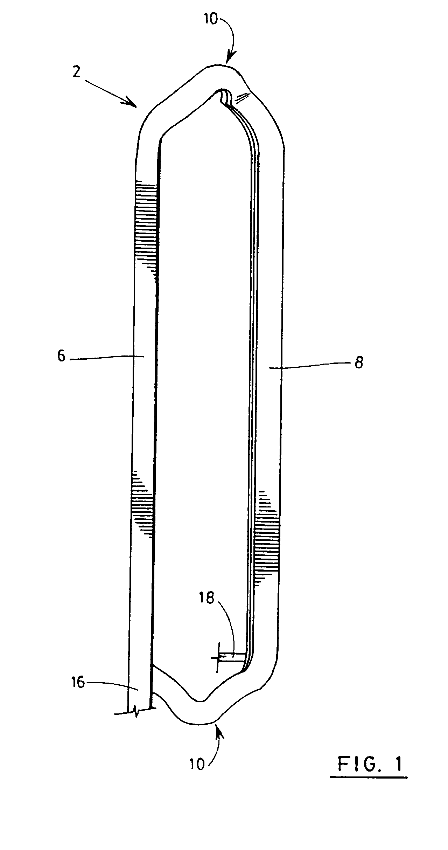

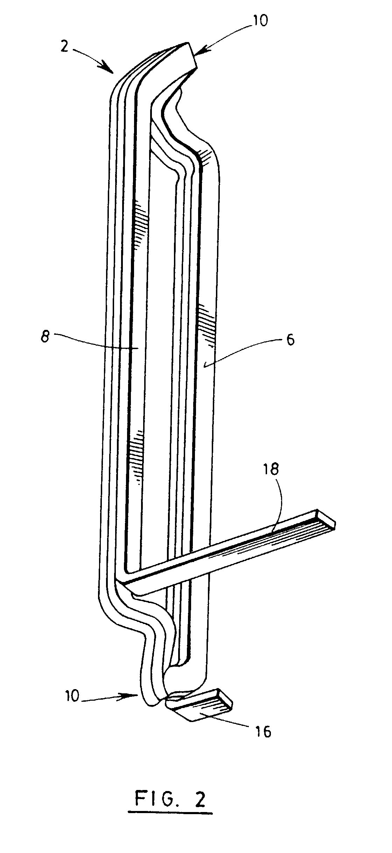

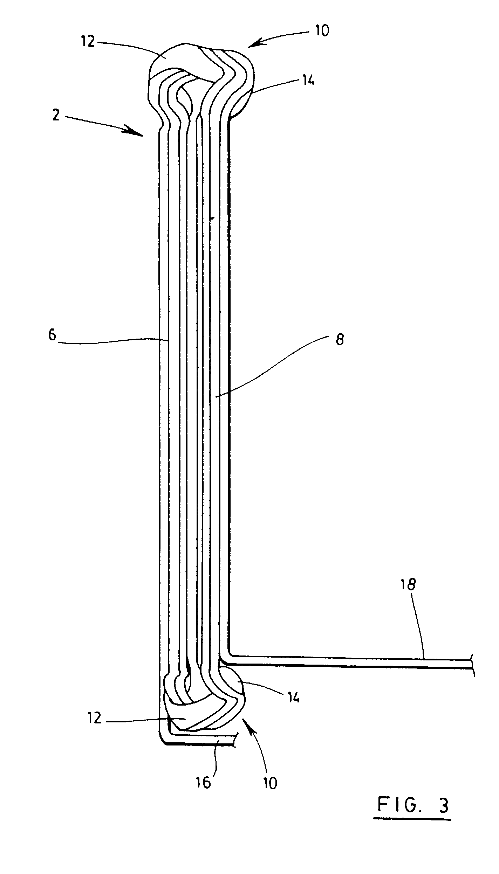

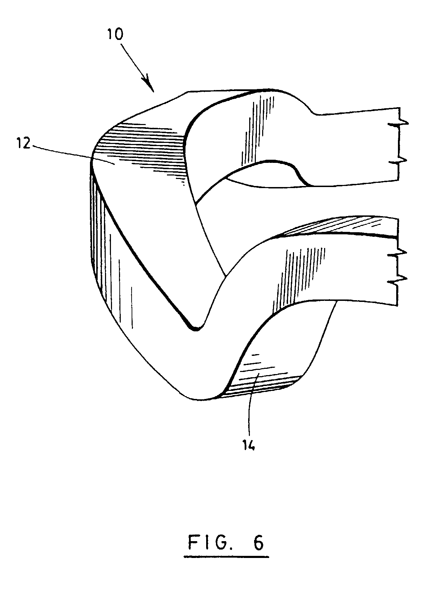

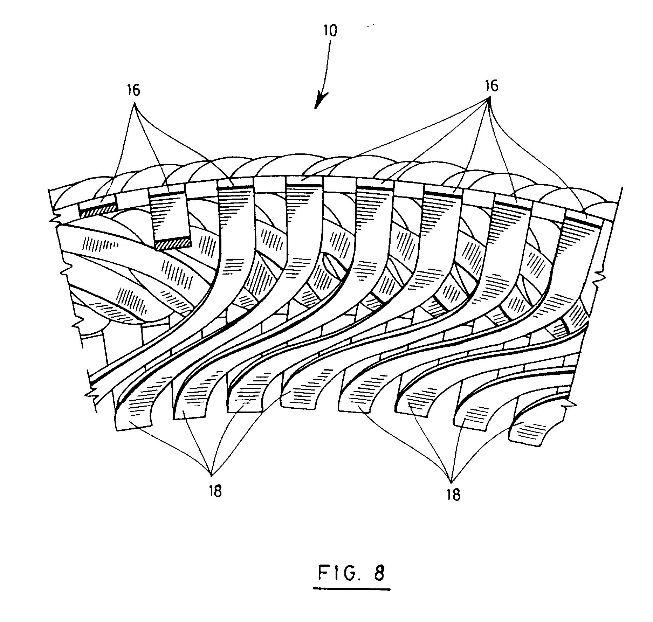

Dans la description qui suit, les éléments semblables sont identifiés par les mêmes numéros de référence à travers tous les dessins. Si on se réfère maintenant aux figures 1 à 8, on peut voir une section de conducteur 2 d'une armature de stator 4 d'une machine dynamoélectrique polyphasée. Tel que connu dans l'art, l'armature de stator 4 est munie d'une série d'encoches parallèles et allongées pour recevoir respectivement des sections de conducteur. La section de conducteur 2 comprend deux côtés parallèles de conducteur 6 et 8 de section substantiellement rectangulaire adaptés pour se loger respectivement dans deux encoches parallèles correspondantes de l'armature de stator 4. Les deux côtés 6 et 8 définissent un plan qui est le plan de la feuille sur laquelle la figure 1 apparaît.

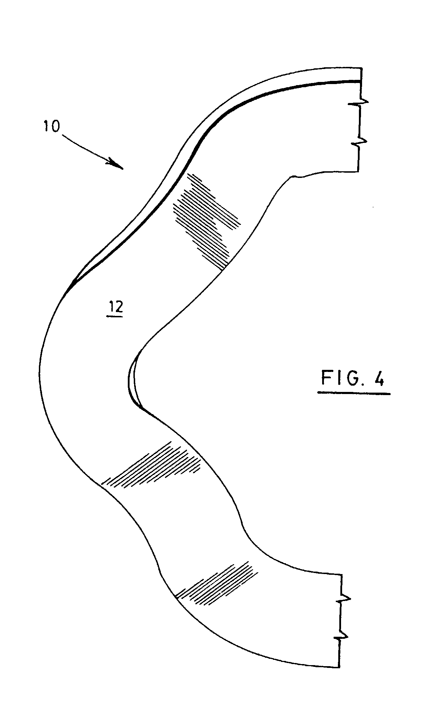

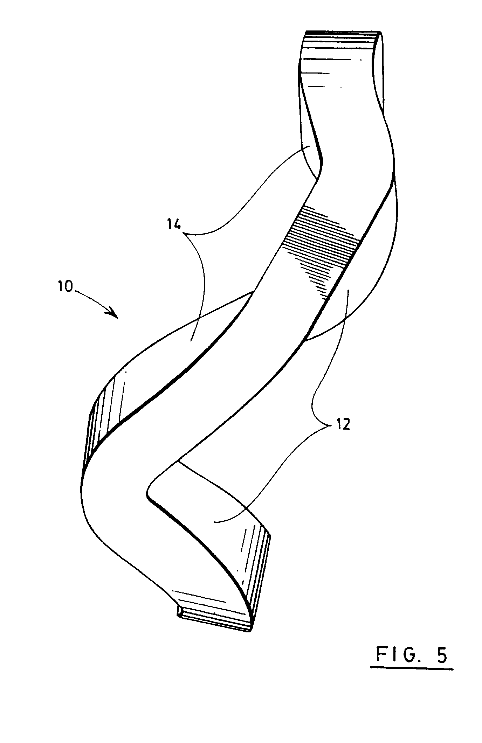

La section de conducteur 2 comprend également au moins une tête de conducteur 10 de section substantiellement rectangulaire, reliant deux extrémités adjacentes des côtés parallèles 6 et 8. Plus spécifiquement, la section de conducteur 2 montrée aux figures 1 à 8 a deux têtes de conducteur 10. Chacune des têtes 10 montre un corps substantiellement en forme de U selon une vue de dessus perpendiculaire audit plan, tel que montré à la figure 4, et un corps ondulé selon une vue de face contenu dans ledit plan, tel que montré à la figure 5.

La tête 10 a une surface supérieure 12 et une surface inférieure 14. La surface supérieure fait face seulement à un côté du plan alors que la surface inférieure fait face seulement au côté opposé du plan.

Dans l'art antérieur, les enroulements d'un moteur sont habituellement faits de conducteurs de section cylindrique. Avec de tels conducteurs de section circulaire, le remplissage des encoches dans lesquelles les conducteurs sont montés donnent un facteur de remplissage de l'ordre de 50% à 55%. L'efficacité d'une machine dépend directement de son facteur de remplissage. Afin d'améliorer ce facteur de remplissage, un conducteur de section rectangulaire est proposé.

Les enroulements de moteur faits de conducteurs de section rectangulaire sont connus dans l'art antérieur. Cependant, pour ces enroulements, tel qu'illustré dans la figure 1 du brevet américain N° 3,453,468, les têtes des bobines montées dans les encoches sont relativement grosses.

Pour atténuer le problème mentionné ci-dessus, une section de conducteur ayant au moins une tête, telle que décrite ci-haut, est proposée selon la présente invention pour obtenir, une même section de conducteur ayant d'une part, un facteur de remplissage de l'ordre de 80% et d'autre part une tête de conducteur qui est plus petite que celles montrées dans l'art antérieur. L'utilisation de plus petites têtes présente plusieurs avantages, notamment; celui de réduire le poids du matériel utilisé pour faire les enroulements, ce matériel étant habituellement du cuivre; celui de réduire la chaleur perdue produite par le courant circulant dans les conducteurs; et finalement celui de produire un moteur plus étroit.

De préférence, le corps ondulé de la tête est asymétrique. Également de préférence, la section de conducteur 2 est constituée d'au moins un tour pour former une bobine. Les têtes 10 d'une section de conducteur 2 sont constituées de deux têtes opposées situées respectivement à des extrémités opposées des deux côtés parallèles 6 et 8.

De préférence, chaque section de conducteur 2 comprend deux extrémités de branchement 16 et 18 pour brancher la section de conducteur 2 en série avec les autres sections de conducteur 2. Ces deux extrémités de branchement 16 et 18 sont localisées sur une de ces têtes.

De préférence, chaque section de conducteur est constituée de plusieurs tours.

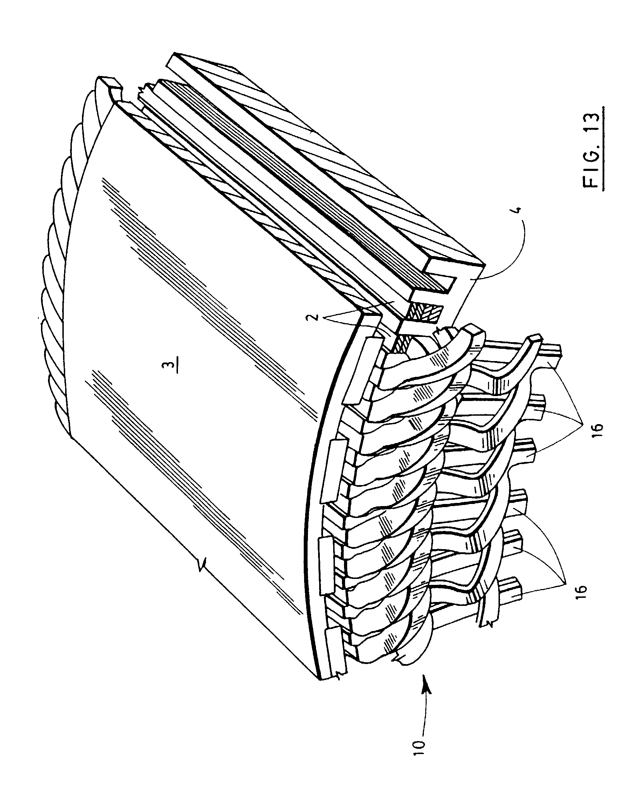

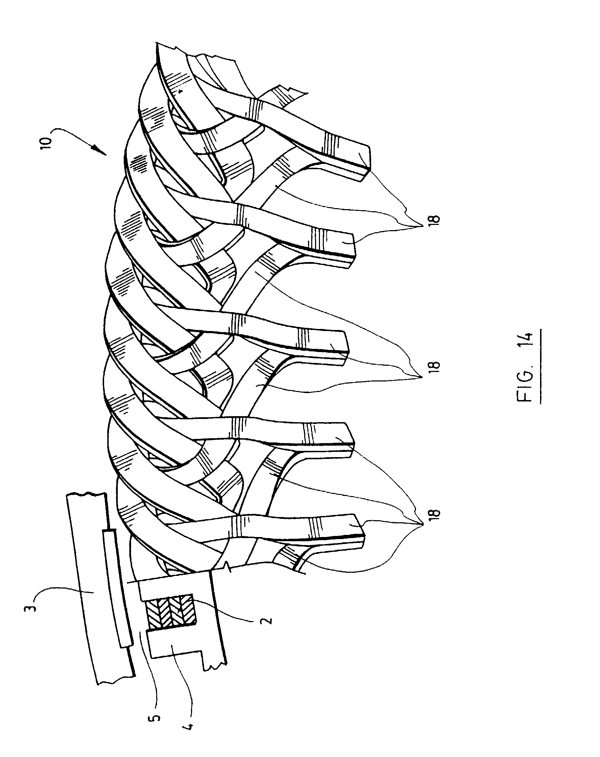

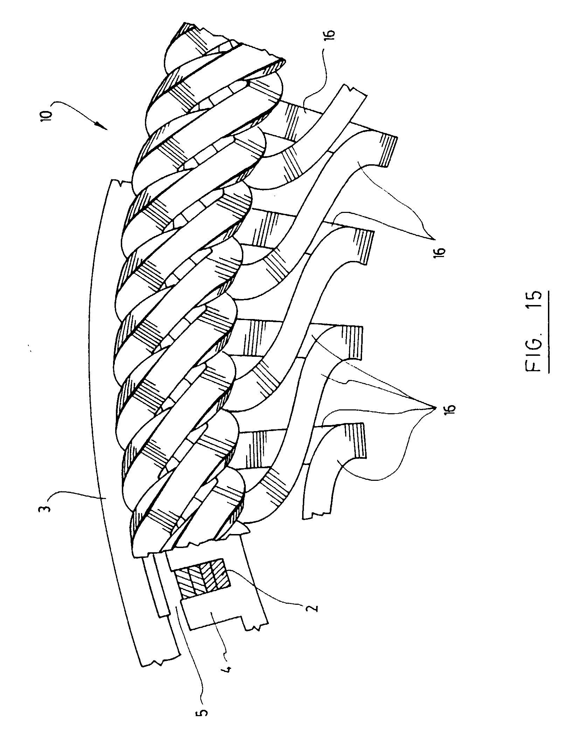

Si on se réfère maintenant aux figures 13, 14 et 15, une pluralité de sections de conducteur 2 en combinaison avec l'armature du stator 4 sont illustrées. L'armature du stator 4 est de forme cylindrique et munie d'encoches parallèles distribuées de façon circonférentielle. L'armature 4 a une surface adjacente à un rotor 3 de la machine lorsque la machine est assemblée. Le rotor 3 a un axe de rotation donné. L'armature 4 est séparée du rotor par un entrefer 5. Si on se réfère maintenant plus spécifiquement à la figure 14, on peut voir que les têtes 10 de chaque section de conducteur ont une partie formant une projection externe et radiale par rapport à l'axe de rotation et à l'intérieur d'un volume cylindrique défini par la circonférence de l'entrefer 5. Ainsi, le rotor 3 peut glisser de manière axiale par rapport à l'armature de stator 4 lorsque la machine est assemblée.

Si on se réfère encore aux figures 13, 14 et 15, les sections de conducteur 2 sont branchées électriquement en série pour former au moins deux enroulements de stator. Dans le cas présent, il y a trois enroulements de stator. Chacun des deux côtés des sections de conducteur 2 est respectivement logé dans deux encoches parallèles correspondantes de l'armature du stator 4.

De préférence, les encoches sont de sectior substantiellement rectangulaire. Également de préférence, les encoches sont des encoches parallèles distribuées circonférentiellement, et conséquemment la surface de l'armature de stator 4, adjacente au rotor 3, est un surface périphérique externe. Ainsi, le rotor 3 est disposé autour de l'armature de stator 4 lorsque la machine est assemblée.

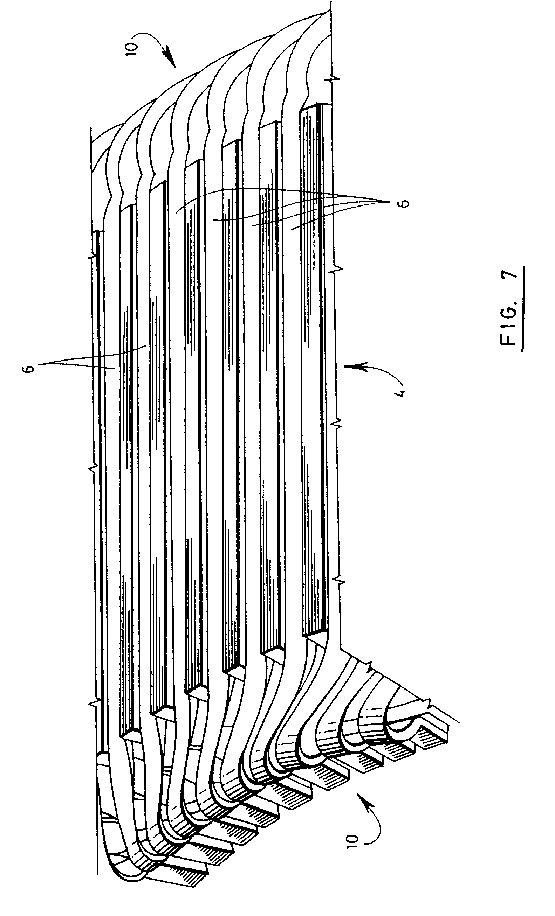

Si on se réfère maintenant aux figures 7, 8 et 17, dE préférence, les enroulements de stator sont constitués par trois enroulements de stator de façon à former une machine triphasée.

On peut voir que les sections de conducteur sont électriquement branchées en série pour obtenir trois enroulements de stator. Ainsi, chacune des têtes a ses deux côtés disposés l'un par à l'autre selon un écart défini par trois encoches.

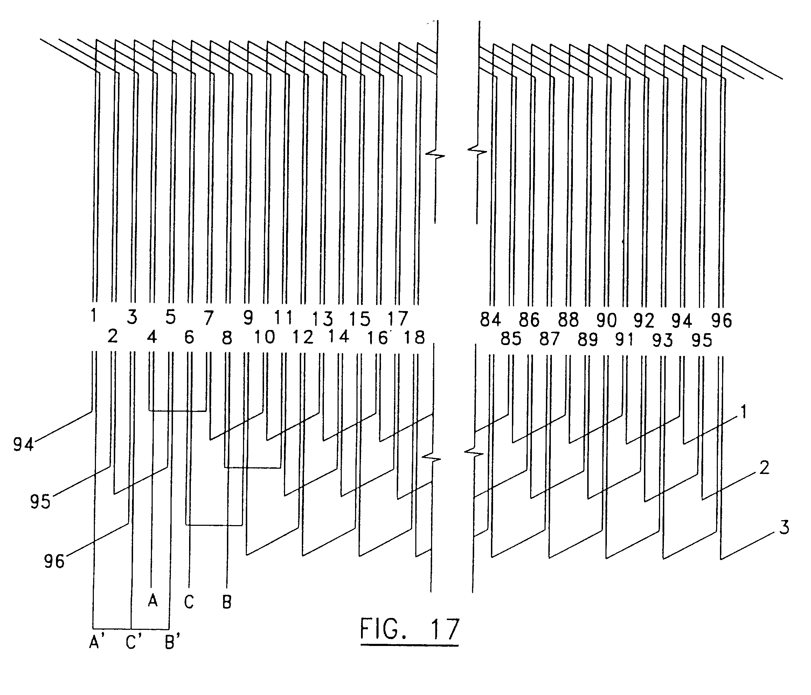

Si on se réfère maintenant plus spécifiquement à la figure 17, de préférence, l'armature de stator 4 est munie de 96 encoches. Les trois enroulements de stator sont alimentés par trois voltages de phase A, B et C.

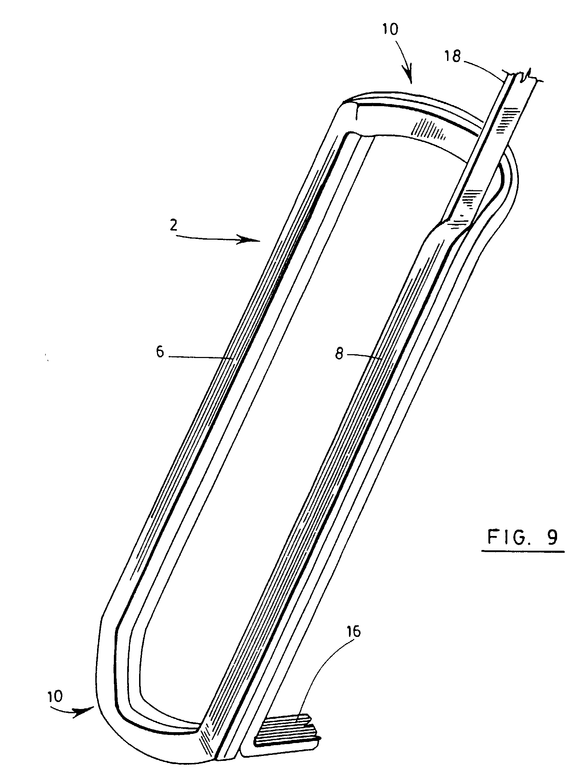

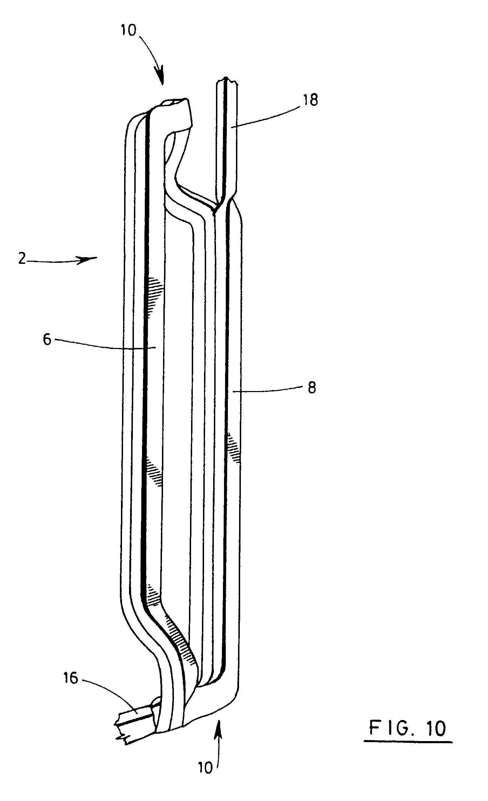

Si on se réfère maintenant aux figures 9 à 15, de préférence, on peut voir que chaque section de conducteur 2 comprend deux extrémités de branchement 16 et 18 pour la brancher en série avec d'autres sections de conducteur 2. Les deux extrémités de branchement 16 et 18 de chaque section de conducteur 2 sont localisées respectivement à ces deux têtes opposées.

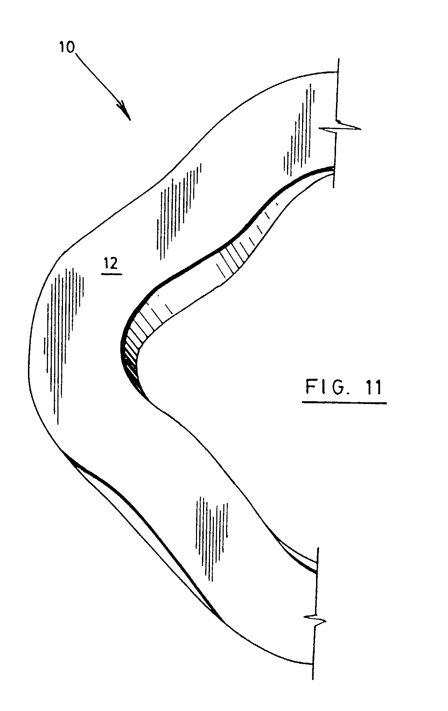

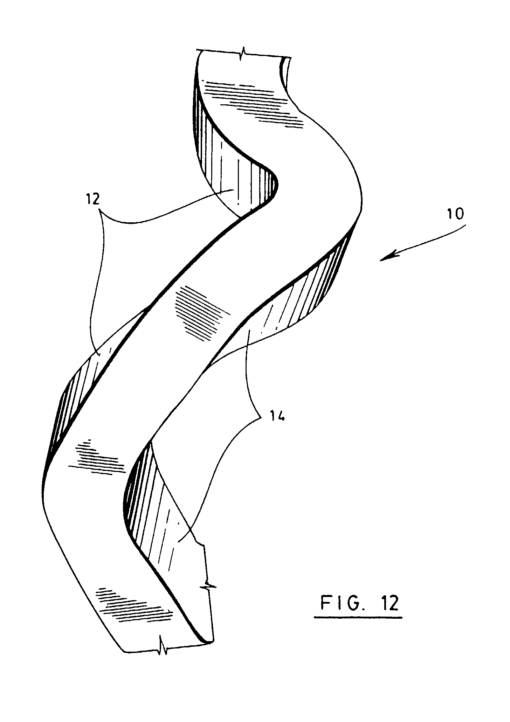

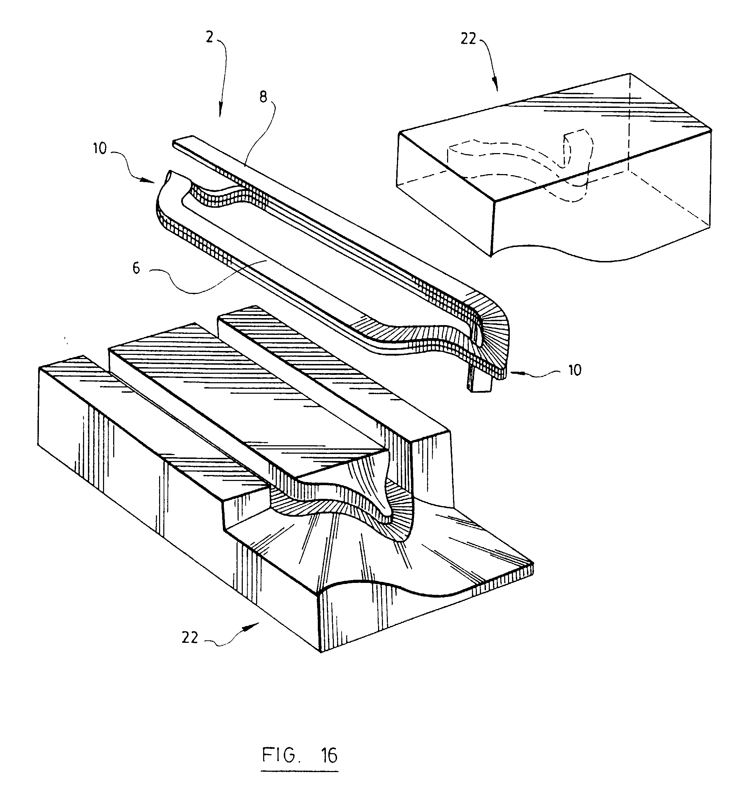

Si on se réfère maintenant à la figure 16, on peut voir un moule 22 en deux parties pour former une tête 10 de la section de conducteur 2 de manière que chaque tête 10 montre un corps substantiellement en forme de U, tel que montré aux figures 4 et 11 et un corps ondulé tel que montré aux figures 5 et 12.

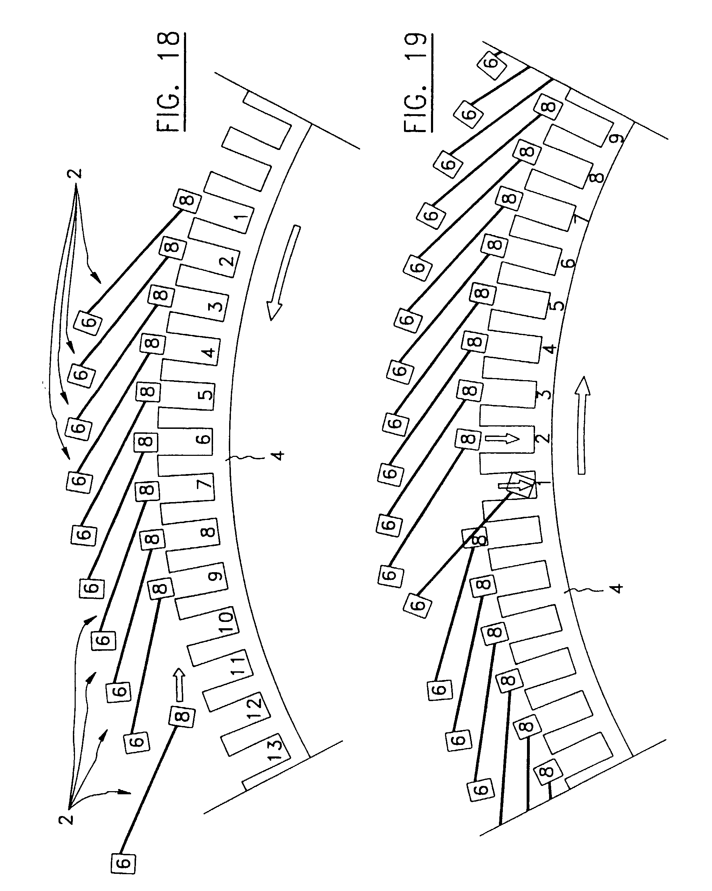

Si on se réfère maintenant aux figures 18 à 21, on peut voir une méthode pour monter des sections de conducteur 2 d'un enroulement de stator sur une armature de stator 4 d'une machine dynamoélectrique, l'armature étant de forme cylindrique. Chacune des sections de conducteur 2 a deux côtés parallèles de conducteur 6 et 8. Deux têtes opposées de conducteur relient respectivement les extrémités adjacentes des côtés parallèles 6 et 8. L'armature de stator 4 est munie d'encoches parallèles distribuées de façon circonférentielle.

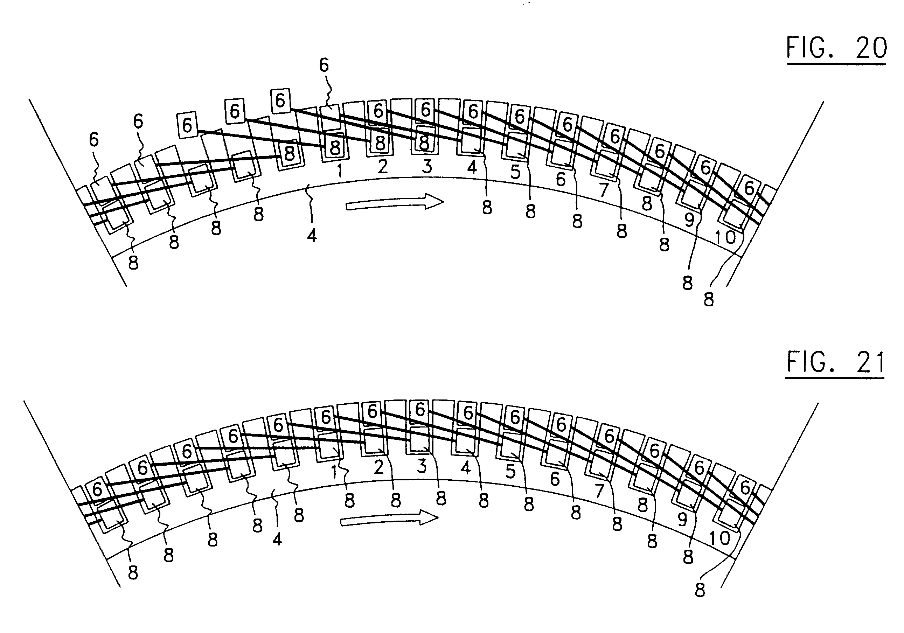

La méthode comprend des étapes où (a) on positionne de façon circonférentielle chacune des sections de conducteur 2 par rapport à l'armature de stator 4. Pour chacune des sections 2, un premier côté de conducteur 8 fait face directement à une des encoches de l'armature 4 et le second côté de conducteur 6 est disposé à une position éloignée par rapport à l'armature de stator 4; après l'étape (a), (b) on insère chacun des premiers côtés de conducteur 8 dans l'encoche correspondante, tel que montré à la figure 19; et (c) on insère chacun des seconds côtés de conducteur 6 dans une autre desdites encoches, qui a déjà reçu un premier côté de conducteur 8 d'une autre section de conducteur 2, tel que montré à la figure 20, jusqu'à ce que tous les côtés 6 et 8 soient montés dans les encoches de l'armature 4, tel que montré à la figure 21.

De préférence, dans l'étape (a), les sections de conducteur 2 sont positionnées, une après l'autre, en partant d'un point donné et en se déplaçant séquentiellement le long de l'armature du stator 4.

De préférence, dans l'étape (b), les premiers côtés 8 des sections de conducteur 2 sont insérés un après l'autre, en partant d'un point donné et se déplaçant séquentiellement le long de l'armature de stator 4. De préférence, dans l'étape (c), chaque section de conducteur a ses deux côtés 6 et 8 qui sont disposés l'un par rapport à l'autre selon un écart défini par trois encoches.

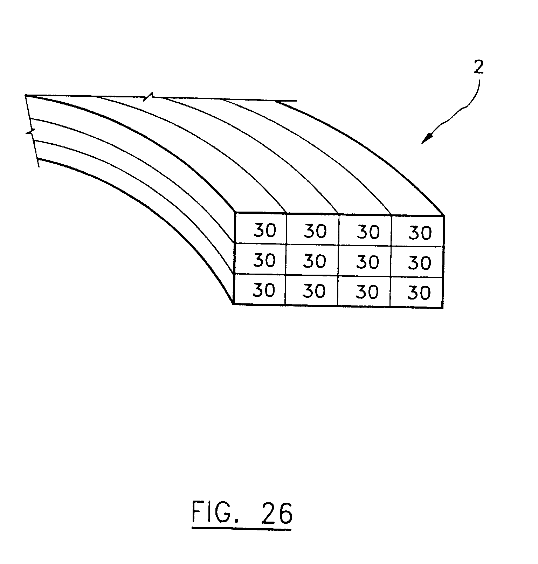

Si on se réfère maintenant à la figure 26, on montre une section de conducteur 2 fait de plusieurs conducteurs 30 parallèles, adjacents 30 et de section rectangulaire.

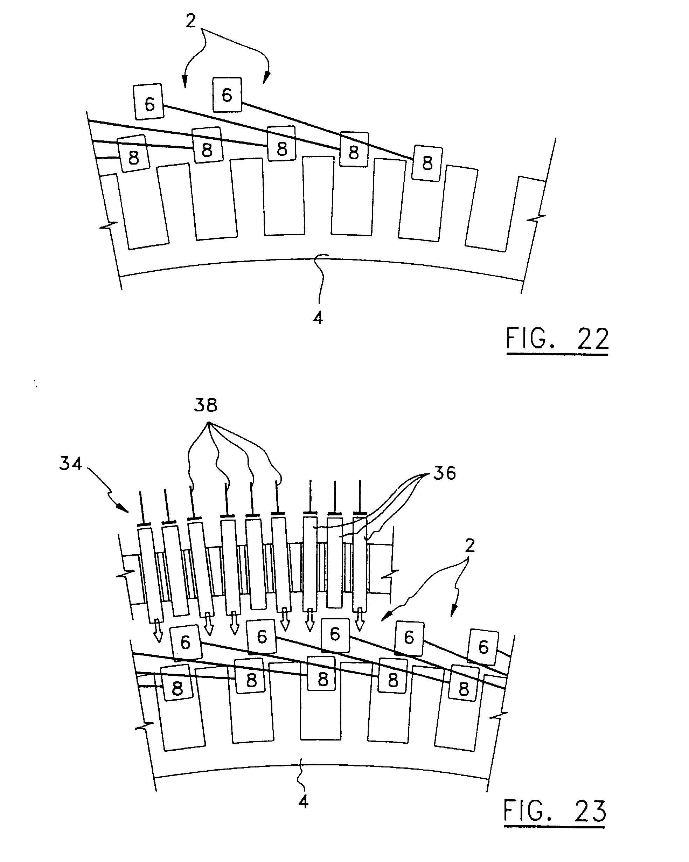

Les figures 22 à 25 montrent une autre méthode pour monter les sections de conducteur 2 d'un enroulement de stator sur une armature de stator d'une machine dynamoélectrique. Chaque section de conducteur 2 a deux côtés parallèles de conducteur 6 et 8. Deux têtes de conducteur opposées relient respectivement deux extrémités adjacentes des côtés parallèles 6 et 8. L'armature de stator 4 est de forme cylindrique et est munie d'encoches parallèles distribuées de façon circonférentielle.

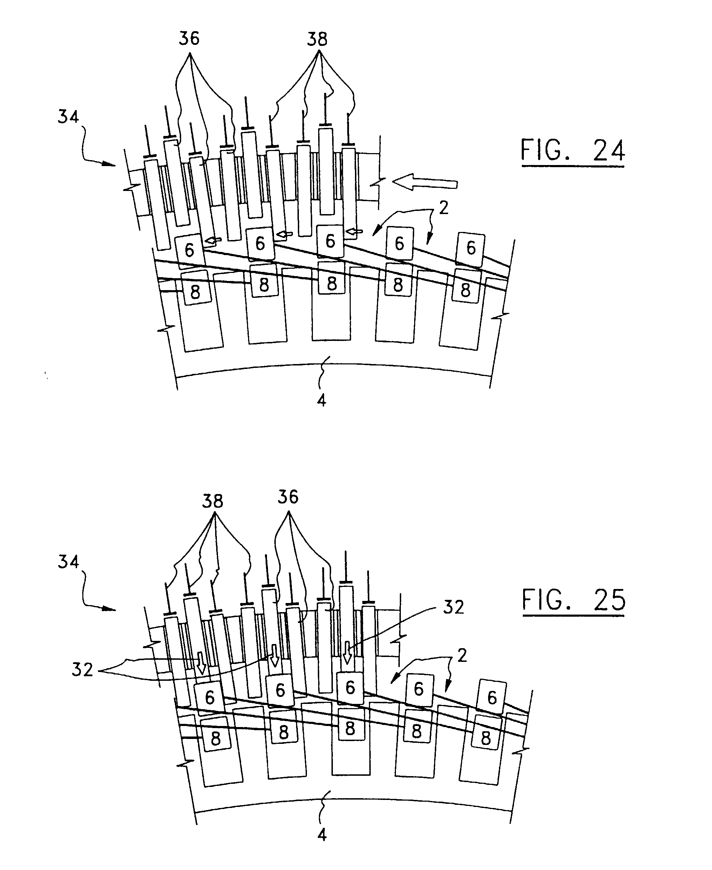

La méthode comprend des étapes où (a) on insère un premier côté de conducteur 8 de chaque section de conducteur 2 au moins partiellement dans une encoche correspondante de l'armature 4, tel que montré à la figure 22; (b) on positionne le second côté 6 de chaque section de conducteur 2, un à côté de l'autre, le long de l'armature de stator, tel que montré à la figure 23; (c) après les étapes (a) et (b), on décale de façon circonférentielle les seconds côtés 6 par rapport à l'armature du stator 4, tel que montré à la figure 24, jusqu'à ce que les seconds côtés de conducteur soient alignés respectivement avec les premiers côtés de conducteur 8 pour former des paires; et (d) après l'étape (c), on applique une force 32 sur les seconds côtés 6 selon une direction radiale de l'armature de stator 4 pour insérer les paires de côtés de conducteur alignés 6 et 8 complètement dans les encoches correspondantes.

Les étapes (c) et (d) de la méthode sont réalisées au moyen d'un instrument en forme de couronne 34 ayant, le long de sa périphérie, une série de membres adjacents 36 déplaçables le long d'une direction radiale lorsqu'une force est appliquée au moyen des pistons 38.

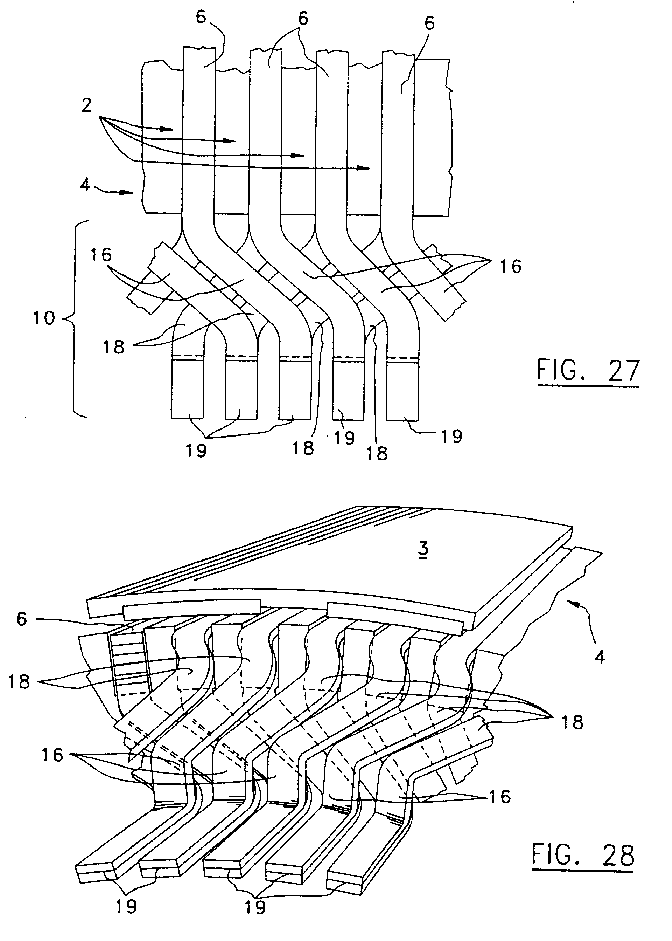

Si on se réfère maintenant aux figures 27 et 28, une pluralité de sections de conducteur 2 en combinaison avec l'armature de stator 4 sont illustrées. L'armature de stator 4 est de forme cylindrique et munie d'encoches parallèles distribuées de façon circonférentielle. L'armature 4 a une surface adjacente au rotor 3 de la machine lorsqu'elle est assemblée. L'armature 4 est séparée du rotor par un entrefer. La pluralité de sections de conducteur 2 est branchée électriquement en série pour former au moins deux enroulements de stator. Les deux côtés de chaque section de conducteur 2 sont respectivement logés dans les encoches parallèles correspondantes de l'armature de stator 4. Chaque section de conducteur 2 est constituée d'au moins un tour pour former une bobine. Chaque section de conducteur 2 comprend deux têtes opposées 10 localisées respectivement à des extrémités opposées des deux côtés parallèles. Chaque section de conducteur comprend deux extrémités de branchement 16 et 18 reliant en série les sections de conducteur 2 via les contacts de branchement 19. Chaque contact de branchement 19 est équidistant des sections de conducteur correspondantes. Pour chacune des sections de conducteurs, les deux extrémités de branchement 16 et 18 sont localisées sur une de ces têtes.

Même si la présente invention a été décrite ci-dessus au moyen de modes de réalisations préférentiels, il faut bien comprendre que toute modification de ces modes de réalisations préférentiels, à l'intérieur de la portée des revendications qui suivent, ne doit pas changer ou altérer la nature et la portée de la présente invention.

## Revendications

1. Une section de conducteur (2) pour une armature de stator (4) d'une machine dynamoélectrique polyphasée, l'armature de stator (4) étant munie d'une série d'encoches parallèles allongées pour recevoir respectivement des sections de conducteur, la section de conducteur (2) comprenant deux côtés (6 et 8) parallèles de conducteur de section substantiellement rectangulaire adaptés pour être logés respectivement dans les encoches parallèles correspondantes de l'armature de stator (4), les deux côtés (6 et 8) définissant un plan, et au moins une tête de conducteur (10) de section substantiellement rectangulaire, reliant deux extrémités adjacentes des deux côtés parallèles (6 et 8), la tête (10) ayant des surfaces opposées supérieure (12) et inférieure (14), la section de conducteur (2) étant caractérisée en ce que:
la tête (10) présente un corps substantiellement en forme de U selon une vue de dessus perpendiculaire audit plan, et un corps ondulé selon une vue de face contenu dans ledit plan, la surface supérieure (12) faisant face seulement à un côté du plan et la surface inférieure (14) faisant face seulement au côté opposé du plan.

2. Une section de conducteur selon la revendication 1, caractérisée en ce que ledit corps ondulé est asymétrique.

3. Une section de conducteur selon la revendication 1, caractérisée en ce que:
ladite section de conducteur (2) est constituée d'au moins un tour pour former une bobine; et
ladite au moins une tête (10) est constituée de deux têtes opposées (10) situées respectivement à des extrémités opposées des deux côtés parallèles (6 et 8).

4. Une section de conducteur selon la revendication 3, caractérisée en ce qu'elle comprend deux extrémités de branchement (16 et 18) pour brancher ladite section de conducteur (2) en série avec d'autres sections de conducteur (2), les deux extrémités de branchement (16 et 18) de ladite section de conducteur (2) étant localisées à une de ses têtes (10).

5. Une section de conducteur selon la revendication 3, caractérisée en ce qu'elle comprend deux extrémités de branchement (16 et 18) pour brancher ladite section de conducteur (2) en série avec d'autres sections de conducteur (2), lesdites deux extrémités de branchement (16 et 18) de ladite section de conducteur (2) étant localisées respectivement à deux têtes opposées (10) de ladite section de conducteur (2).

6. Une section de conducteur selon la revendication 3, caractérisée en ce que ledit au moins un tour comprend plusieurs tours.

7. Une section de conducteur selon la revendication 1, caractérisée en ce que ladite section de conducteur (2) est faite de plusieurs conducteurs parallèles et adjacents (30) de section rectangulaire.

8. Une pluralité de sections de conducteur selon la revendication 1, en combinaison avec ladite armature de stator (4), caractérisées en ce que:
l'armature de stator (4) est une armature de stator de forme cylindrique et munie d'encoches parallèles distribuées de façon circonférentielle, l'armature (4) ayant une surface adjacente à un rotor (3) de la machine lorsque ladite machine est assemblée, le rotor (3) ayant un axe de rotation, l'armature 4 étant séparée du rotor (3) par un entrefer (5), et au moins une des têtes (10) ayant une partie formant une projection externe et radiale par rapport à l'axe de rotation, à l'intérieur d'un volume cylindrique défini par la circonférence de l'entrefer (5);
la pluralité de sections de conducteur (2) étant branchées en série pour former au moins deux enroulements de stator, les deux côtés (6 et 8) de chaque section de conducteur (2) étant respectivement logés dans deux encoches parallèles correspondantes de l'armature de stator (4).

9. Une pluralité de sections de conducteur en combinaison avec ladite armature de stator (4), selon la revendication 8, caractérisées en ce que les encoches ont des sections substantiellement rectangulaires.

10. Une pluralité de sections de conducteur en combinaison avec ladite armature de stator (4), selon la revendication 8, caractérisées en ce que lesdits au moins deux enroulements de stator comprennent trois enroulements de stator.

11. Une pluralité de sections de conducteur en combinaison avec ladite armature de stator (4), selon la revendication 8, caractérisées en ce que les encoches sont des encoches parallèles externes distribuées de façon circonférentielle, et la surface adjacente au rotor (3) est une surface périphérique externe.

12. Une pluralité de sections de conducteur selon la revendication 1, en combinaison avec ladite armature de stator (4), caractérisées en ce que:
l'armature de stator (4) est une armature de stator (4) de forme cylindrique munie d'encoches parallèles distribuées de façon circonférentielle, l'armature (4) ayant une surface adjacente à un rotor (3) de ladite machine lorsque ladite machine est assemblée, l'armature (4) étant séparée du rotor (3) par un entrefer (5), le rotor (3) ayant un axe de rotation;
ladite pluralité de sections de conducteur (2) est branchée en série pour former au moins deux enroulements de stator, les deux côtés (6 et 8) de chaque section de conducteur (2) étant respectivement logés dans deux encoches parallèles correspondantes de l'armature de stator (4);
chacune des sections de conducteur (2) est constituée d'au moins un tour pour former une bobine;
ladite au moins une tête (10) de chaque section de conducteur (2) est constituée de deux têtes opposées (10) localisées respectivement à des extrémités opposées des deux côtés parallèles (6 et 8); et
chacune des sections de conducteur (2) comprend deux extrémités de branchement (16 et 18) reliant via des contacts de branchement lesdites sections de conducteur (2) en série, chacun des contacts de branchement étant équidistants des deux sections de conducteur (2) correspondantes, lesdites extrémités de branchement (16 et 18) de chacune des sections de conducteur (2) étant localisées seulement sur une de ses têtes correspondantes (10).

13. Une méthode pour monter des sections de conducteur (2) d'un enroulement de stator sur une armature de stator (4) de forme cylindrique d'une machine dynamoélectrique, chacune des sections de conducteur (2) ayant deux côtés parallèles (6 et 8) de conducteur et au moins une tête de conducteur (10) reliant deux extrémités adjacentes desdits deux côtés parallèles (6 et 8), ladite armature de stator (4) étant munie d'encoches parallèles distribuées de façon circonférentielle, la méthode étant caractérisée en ce qu'elle comprend des étapes où:
a) on positionne de façon circonférentielle chacune des sections de conducteur (2) par rapport à l'armature de stator (4) de façon que pour chacune desdites sections (2), un premier côté de conducteur (8) fait face directement à une des encoches, et un second côté de conducteur (6) est disposé à une position éloignée par rapport à l'armature de stator (4);
b) après l'étape (a), on insère chacun des premiers côtés de conducteur (8) dans l'encoche correspondante; et
c) on insère chacun des seconds côtés de conducteur (6) dans une autre desdites encoches, qui a déjà reçu un premier côté de conducteur (8) d'une autre section de conducteur (2), jusqu'à ce que tous les côtés (6 et 8) soient montés dans lesdites encoches.

14. Une méthode selon la revendication 13, caractérisée en ce qu'elle comprend en outre, avant l'étape (a), une étape où l'on forme les têtes (10) des sections de conducteur (2) de façon à ce que chaque tête (10) montre un corps substantiellement en forme de U selon une vue de dessus perpendiculaire à un plan défini par les deux côtés de conducteur (6 et 8) correspondants, et un corps ondulé selon une vue de face contenu dans ce même plan.

15. Une méthode selon la revendication 13, caractérisée en ce que, dans l'étape (a), les sections de conducteur (2) sont positionnées une après l'autre en partant d'un point donné et en se déplaçant séquentiellement le long de l'armature du stator (4).

16. Une méthode selon la revendication 13, caractérisée en ce que, dans l'étape (b), lesdits premiers côtés (8) des sections de conducteur (2) sont insérés, un après l'autre, en partant d'un point donné et en se déplaçant séquentiellement le long de l'armature de stator (4).

17. Une méthode selon la revendication 13, caractérisée en ce que, dans l'étape (c), les deux côtés de conducteur (6 et 8) de chaque section de conducteur (2) sont disposés l'un par rapport à l'autre selon un écart défini par trois encoches.

18. Une méthode selon la revendication 13, caractérisée en ce qu'elle comprend en outre une étape (d) où on branche électriquement au moins quelques unes desdites sections de conducteur (2) en série pour obtenir au moins un enroulement de stator.

19. Une méthode selon la revendication 18, caractérisée en ce que ladite étape (d) comprend une étape où on branche électriquement lesdites sections de conducteur (2) en série pour obtenir trois enroulements de stator séparés.

20. Une méthode pour monter des sections de conducteur (2) d'un enroulement de stator sur une armature de stator (4) de forme cylindrique d'une machine dynamoélectrique, chacune des sections de conducteur (2) ayant deux côtés parallèles (6 et 8) de conducteur et au moins une tête de conducteur (10) reliant deux extrémités adjacentes des deux côtés parallèles (6 et 8), ladite armature de stator (4) étant munie d'encoches parallèles distribuées de façon circonférentielle, la méthode étant caractérisée en ce qu'elle comprend des étapes où:
a) on insère un premier côté de conducteur (8) de chaque section de conducteur (2) partiellement dans une encoche correspondante desdites encoches parallèles;
b) on positionne un second côté de conducteur (6) de chaque section de conducteur (2), un à côté de l'autre, le long de l'armature de stator (4);
c) après les étapes (a) et (b), on décale de façon circonférentielle les seconds côtés de conducteur (6) par rapport à l'armature de stator (4) jusqu'à ce que les seconds côtés de conducteur (6) soient alignés respectivement avec les premiers côtés de conducteur (8) pour former des paires de côtés de conducteur (6 et 8) alignés; et
d) après l'étape (c), on applique une force sur les seconds côtés de conducteur (6) selon une direction radiale de ladite armature de stator (4) cylindrique pour insérer les paires de côtés de conducteur (6 et 8) alignés complètement dans les encoches correspondantes.

21. Une méthode selon la revendication 20, caractérisée en ce qu'elle comprend en outre, avant l'étape (a), une étape où on forme les têtes (10) des sections de conducteur (2) de manière à ce que chacune des têtes (10) montre un corps substantiellement en forme de U selon une vue de dessus perpendiculaire à un plan défini par les deux côtés de conducteur (6 et 8) correspondants, et un corps ondulé selon une vue de face contenu dans ce même plan.

22. Une méthode selon la revendication 20, caractérisée en ce que, dans l'étape (c), les deux côtés de conducteur (6 et 8) de chaque section de conducteur (2) sont disposés l'un par rapport à l'autre selon un écart défini par trois encoches.

23. Une méthode selon la revendication 20, caractérisée en ce qu'elle comprend en outre une étape (e) où on branche électriquement en série au moins quelques unes des sections de conducteur (2) pour obtenir au moins un enroulement de stator.

## Patentansprüche

1. Leiter (2) für einen Stator (4) einer mehrphasigen dynamoelektrischen Maschine, wobei der Stator (4) eine Reihe von parallelen, langgestreckten Taschen zur entsprechenden Aufnahme von Leitern aufweist, wobei der Leiter (2) zwei parallele, im Schnitt im wesentlichen rechteckige Leiter-Seitenabschnitte (6 und 8) aufweist, die geeignet sind, um in den korrespondierenden, parallelen Taschen des Stators (4) zu sitzen, wobei die beiden Seitenabschnitte (6 und 8) eine Ebene und wenigstens einen im Schnitt im wesentlichen rechteckigen Kopf (10), der zwei benachbarte Enden von zwei parallelen Seitenabschnitten (6 und 8) verbindet, definieren, wobei der Kopf (10) gegenüberliegende obere und untere Flächen (12, 14) besitzt, wobei der Leiter (2) dadurch gekennzeichnet ist, daß
der Kopf (10) einen im wesentlichen U-förmigen Körper in einer Ansicht von oben senkrecht auf die besagte Ebene und einen gewellten Körper in einer in der besagten Ebene enthaltenen Stirnansicht aufweist, wobei die obere Fläche (12) nur zu einer Seite der Ebene und die untere Fläche (14) nur zur gegenüberliegenden Seite gerichtet ist.

2. Leiter nach Anspruch 1, dadurch gekennzeichnet, daß der gewellte Körper asymmetrisch ist.

3. Leiter nach Anspruch 1, dadurch gekennzeichnet, daß der Querschnitt des Leiters (2) durch wenigstens eine Windung zum Bilden einer Wicklung und der wenigstens eine Kopf (10) aus zwei gegenüberliegenden Köpfen (10) gebildet wird, die sich an den gegenüberliegenden Enden von zwei parallelen Seitenabschnitten (6 und 8) befinden.

4. Leiter nach Anspruch 3, dadurch gekennzeichnet, daß er zwei Anschlußenden (16 und 18) zum Schalten des Leiters (2) in Reihe mit anderen Leitern (2) umfaßt, wobei die beiden Anschlußenden (16 und 18) des Leiters (2) an einem seiner Köpfe (10) lokalisiert sind.

5. Leiter nach Anspruch 3, dadurch gekennzeichnet, daß er zwei Anschlußenden (16 und 18) zum Schalten des Leiters (2) in Reihe mit anderen Leitern (2) umfaßt, wobei die beiden Anschlußenden (16 und 18) des Leiters (2) entsprechend an den beiden gegenüberliegenden Köpfen (10) lokalisiert sind.

6. Leiter nach Anspruch 3, dadurch gekennzeichnet, daß die wenigstens eine Windung mehrere Windungen umfaßt.

7. Leiter nach Anspruch 1, dadurch gekennzeichnet, daß der Leiter (2) aus mehreren parallelen und benachbarten Leitern (30) von rechteckigem Querschnitt besteht.

8. Vielzahl von Leitern nach Anspruch 1 in Kombination mit dem Stator (4), dadurch gekennzeichnet, daß der Stator (4) eine zylindrische Form aufweist und mit parallelen, über den Umfang verteilten Taschen versehen ist, wobei der Stator (4) eine einem Rotor (3) der Maschine benachbarte Fläche aufweist, wenn die Maschine zusammengebaut ist, wobei der Rotor (3) eine Drehachse aufweist, der Stator (4) vom Rotor (3) durch einen Luftspalt (5) getrennt ist und wenigstens einer der Köpfe (10) einen Abschnitt besitzt, der eine äußere und radiale Projektion in bezug auf die Drehachse zum Inneren eines zylindrischen Volumens, definiert durch den Umfang des Luftspalts (5), bildet;
wobei die Vielzahl der Leiter (2) in Reihe geschaltet sind, um wenigstens zwei Statorwicklungen zu bilden, wobei die beiden Seitenabschnitte (6 und 8) jedes Leiters (2) entsprechend in zwei entsprechenden parallelen Taschen des Stators (4) angeordnet sind.

9. Vielzahl von Leitern in Kombination mit dem Stator (4) nach Anspruch 8, dadurch gekennzeichnet, daß die Taschen im wesentlichen rechteckigen Querschnitt besitzen.

10. Vielzahl von Leitern in Kombination mit dem Stator (4) nach Anspruch 8, dadurch gekennzeichnet, daß die wenigstens zwei Wicklungen des Stators drei Statorwicklungen umfassen.

11. Vielzahl von Leitern in Kombination mit dem Stator (4) nach Anspruch 8, dadurch gekennzeichnet, daß die Taschen entlang des Umfangs verteilte, parallele Außentaschen sind und die zum Rotor (3) benachbarte Fläche eine Außenumfangsfläche ist.

12. Vielzahl von Leitern nach Anspruch 1 in Kombination mit dem Stator (4), dadurch gekennzeichnet, daß der Stator (4) eine zylindrische Form aufweist und mit parallelen, über den Umfang verteilten Taschen versehen ist, wobei der Stator (4) eine einem Rotor (3) der Maschine benachbarte Fläche aufweist, wenn die Maschine zusammengebaut ist, wobei der Stator (4) vom Rotor (3) durch einen Luftspalt (5) getrennt ist und der Rotor (3) eine Drehachse aufweist;
wobei die Vielzahl der Leiter (2) in Reihe geschaltet sind, um wenigstens zwei Statorwicklungen zu bilden, wobei die beiden Seitenabschnitte (6 und 8) jedes Leiters (2) entsprechend in zwei entsprechenden parallelen Taschen des Stators (4) angeordnet sind;
wobei jeder Leiter (2) durch wenigstens eine Windung zum Bilden einer Wicklung gebildet wird;
wobei wenigstens ein Kopf (10) jedes Leiters (2) aus zwei gegenüberliegenden Köpfen (10) gebildet wird, die an den gegenüberliegenden Enden von zwei parallelen Seitenabschnitten (6 und 8) lokalisiert sind; und
wobei jeder Leiter (2) zwei Anschlußenden (16 und 18) aufweist, die über Anschlußkontakte die Leiter (2) in Reihe schalten, wobei jeder Anschlußkontakt äquidistant zu zwei entsprechenden Leitern (2) ist, wobei die Anschlußenden (16 und 18) jedes der Leiter (2) nur an einem seiner entsprechenden Köpfe (10) lokalisiert sind.

13. Verfahren zum Montieren von Leitern (2) einer Statorwicklung auf einem Stator (4) zylindrischer Form einer dynamoelektrischen Maschine, wobei jeder Leiter (2) zwei parallele Leiter-Seitenabschnitte (6 und 8) und wenigsten einen Leiterkopf (10) besitzt, der zwei benachbarte Enden der beiden parallelen Seitenabschnitte (6 und 8) verbindet, wobei der Stator (4) mit parallelen, umfänglich verteilten Taschen versehen ist, wobei das Verfahren dadurch gekennzeichnet ist, daß es Schritte umfaßt, in denen man
a) in Umfangsrichtung jeden der Leiter (2) in bezug auf den Stator (4) derart positioniert, daß für jeden der Leiter (2) ein erster Leiter-Seitenabschnitt (8) direkt einer der Taschen gegenüberliegt und der zweite Leiter-Seitenabschnitt (6) in bezug auf den Stator (4) in einer entfernten Position angeordnet ist;
b) nach dem Schritt (a) jeder der ersten Leiter-Seitenabschnitte (8) in die entsprechende Tasche einsetzt;
c) jede der zweiten Leiter-Seitenabschnitte (6) in eine andere der Taschen, die bereits einen ersten Leiter-Seitenabschnitt (8) eines anderen Leiters (2) aufgenommen hat, einsetzt, bis alle Seitenabschnitte (6 und 8) in den Taschen angeordnet sind.

14. Verfahren nach Anspruch 13, dadurch gekennzeichnet, daß es zudem vor dem Schritt (a) einen Schritt umfaßt, bei dem man die Köpfe (10) der Leiter (2) derart bildet, daß jeder Kopf (10) einen im wesentlichen U-förmigen Körper von oben senkrecht zur Ebene definiert durch die beiden Leiter-Seitenabschnitte (6 und 8) und einen gewellten Körper gemäß einer Stirnansicht in der gleichen Ebene zeigt.

15. Verfahren nach Anspruch 13, dadurch gekennzeichnet, daß im Schritt (a) die Leiter (2) nacheinander auf der Basis eines gegebenen Punktes positioniert und aufeinanderfolgend längs des Stators (4) verschoben werden.

16. Verfahren nach Anspruch 13, dadurch gekennzeichnet, daß im Schritt (b) die ersten Seitenabschnitte (8) der Leiter (2) nacheinander auf der Basis eines gegebenen Punktes eingesetzt und aufeinanderfolgend längs des Stators (4) verschoben werden.

17. Verfahren nach Anspruch 13, dadurch gekennzeichnet, daß im Schritt (c) die beiden Seitenabschnitte (6 und 8) jedes Leiters (2) in bezug zum anderen gemäß einer Teilung definiert durch drei Taschen angeordnet werden.

18. Verfahren nach Anspruch 13, dadurch gekennzeichnet, daß es zudem einen Schritt (d) umfaßt, in dem man elektrisch wenigstens einige der Leiter (2) in Reihe schaltet, um wenigstens eine Statorwicklung zu erhalten.

19. Verfahren nach Anspruch 18, dadurch gekennzeichnet, daß Schritt (d) einen Schritt umfaßt, in dem man die Leiter (2) in Reihe schaltet, um drei getrennte Statorwicklungen zu erhalten.

20. Verfahren zum Montieren von Leitern (2) einer Statorwicklung auf einem Stator (4) zylindrischer Form einer dynamoelektrischen Maschine, wobei jeder Leiter (2) zwei parallele Leiter-Seitenabschnitte (6 und 8) und wenigsten einen Leiterkopf (10) besitzt, der zwei benachbarte Enden der beiden parallelen Seitenabschnitte (6 und 8) verbindet, wobei der Stator (4) mit parallelen, umfänglich verteilten Taschen versehen ist, wobei das Verfahren dadurch gekennzeichnet ist, daß es Schritte umfaßt, in denen man
a) einen ersten Leiter-Seitenabschnitt (8) jedes Leiters (2) teilweise in eine entsprechende der parallelen Taschen einsetzt;
b) einen zweiten Leiter-Seitenabschnitt (6) jedes Leiters (2) nebeneinander längs des Stators (4) positioniert;
c) nach den Schritten (a) und (b) die zweiten Leiter-Seitenabschnitte (6) in bezug auf den Stator (4) neigt, bis die zweiten Leiter-Seitenabschnitte (6) mit den ersten Leiter-Seitenabschnitten (8) ausgerichtet sind, um Paare von fluchtenden Leiter-Seitenabschnitten (6 und 8) zu erhalten; und
d) nach dem Schritt (c) eine Kraft auf die zweiten Leiter-Seitenabschnitte (6) in einer Richtung radial zum zylindrischen Stator (4) einwirken läßt, um die Paare von fluchtenden Leiter-Seitenabschnitten (6 und 8) vollständig in die entsprechenden Taschen einzusetzen.

21. Verfahren nach Anspruch 20, dadurch gekennzeichnet, daß es zudem vor dem Schritt (a) einen Schritt umfaßt, bei dem man die Köpfe (10) der Leiter (2) derart bildet, daß jeder Kopf (10) einen im wesentlichen U-förmigen Körper von oben senkrecht zur Ebene definiert durch die beiden Leiter-Seitenabschnitte (6 und 8) und einen gewellten Körper gemäß einer Stirnansicht in der gleichen Ebene zeigt.

22. Verfahren nach Anspruch 20, dadurch gekennzeichnet, daß im Schritt (c) die beiden Seitenabschnitte (6 und 8) jedes Leiters (2) in bezug zum anderen gemäß einer Teilung definiert durch drei Taschen angeordnet werden.

23. Verfahren nach Anspruch 20, dadurch gekennzeichnet, daß es zudem einen Schritt (e) umfaßt, in dem man elektrisch wenigstens einige der Leiter (2) in Reihe schaltet, um wenigstens eine Statorwicklung zu erhalten.

## Claims

1. A conductor section (2) for a stator frame (4) of a polyphase dynamoelectric machine, the stator frame (4) being provided with a series of elongated parallel slots for receiving respectively conductor sections, the conductor section (2) comprising two parallel conductor sides (6 and 8) of substantially rectangular cross-section adapted to fit respectively into the correponding parallel slots of the stator frame (4), the two sides (6 and 8) defining a plane, and at least one conductor head (10) of substantially rectangular cross-section, connecting two adjacent ends of the two parallel sides (6 and 8), the head (10) having top and bottom opposite surfaces (12 and 14), the conductor section (2) being characterized in that:
the head (10) shows a substantially U-shaped body when seen from a top view perpendicular to said plane, and a waved-shape body when seen from a front view contained in said plane, the top surface (12) facing only one side of the plane and the bottom surface (14) facing only the opposite side of the plane.

2. A conductor section according to claim 1, characterized in that said waved-shape body is asymmetrical.

3. A conductor section according to claim 1, characterized in that:
said conductor section (2) is constituted of at least one turn to form a coil; and
said at least one head (10) is constituted of two opposite heads (10) located respectively at opposite ends of the two parallel sides (6 and 8).

4. A conductor section according to claim 3, characterized in that it comprises two connecting ends (16 and 18) for connecting said conductor section (2) in series with other conductor sections (2), the two connecting ends (16 and 18) of said conductor section (2) being located at one of its heads (10).

5. A conductor section according to claim 3, characterized in that it comprises two connecting ends (16 and 18) for connecting said conductor section (2) in series with other conductor sections (2), said two connecting ends (16 and 18) of said conductor section (2) being located respectively at two opposite heads (10) of said conductor section (2).

6. A conductor section according to claim 3, characterized in that said at least one turn comprises several turns.

7. A conductor section according to claim 1, characterized in that said conductor section (2) is made of several adjacent and parallel conductors (30) of rectangular cross-section.

8. A plurality of conductor sections according to claim 1, in combination with said stator frame (4), characterized in that:
the stator frame (4) is a cylindrical shaped stator frame provided with circumferentially distributed parallel slots, the frame (4) having a surface adjacent to a rotor (3) of the machine when said machine is assembled, the rotor (3) having a rotation axis, the frame (4) being separated from the rotor (3) by an air gap (5), and at least one of the heads (10) having a portion forming an external and radial projection with respect to the rotation axis, inside a cylindrical volume defined by the circumference of the air gap (5);
the plurality of conductor sections (2) being connected is series to form at least two stator windings, the two sides (6 and 8) of each conductor section (2) being respectively fitted into two corresponding parallel slots of the stator frame (4).

9. A plurality of conductor sections in combination with said stator frame (4), according to claim 8, characterized in that the slots have substantially rectangular cross-sections.

10. A plurality of conductor sections in combination with said stator frame (4), according to claim 8, characterized in that said at least two stator windings comprise three stator windings.

11. A plurality of conductor section in combination with said stator frame (4), according to claim 8, characterized in that the slots are outer circumferentially distributed parallel slots, and the surface adjacent to the rotor (3) is an outer peripheral surface.

12. A plurality of conductor section according to claim 1, in combination with said stator frame (4), characterized in that:
the stator frame (4) is a cylindrical shaped stator frame (4) provided with circumferentially distributed parallel slots, the frame (4) having a surface adjacent to a rotor (3) of said machine when said machine is assembled, the frame (4) being separated from the rotor (3) by an air gap (5), the rotor (3) having a rotation axis;
said plurality of conductor sections (2) is connected in series to form at least two stator windings, the two sides (6 and 8) of each conductor section (2) being respectively fitted in two corresponding parallel slots of the stator frame (4);
each of the conductor sections (2) is constituted of at least one turn to form a coil;
said at least one head (10) of each conductor section (2) is constituted of two opposite heads (10) located respectively at opposite ends of the two parallel sides (6 and 8); and
each of the conductor sections (2) comprises two connecting ends (16 and 18) connecting via connecting contacts said conductor sections (2) in series, each of the connecting contacts being equidistant from the two corresponding conductor sections (2), said connecting ends (16 and 18) of each of the conductor sections (2) being located at only one of its corresponding heads (10).

13. A method for mounting conductor sections (2) of a stator winding onto a cylindrical shaped stator frame(4) of a dynamoelectric machine, each of the conductor sections (2) having two parallel conductor sides (6 and 8) and at least one conductor head (10) connecting two adjacent ends of said two parallel sides (6 and 8), said stator frame (4) being provided with circumferentially distributed parallel slots, the method being characterized in that it comprises the steps of:
a) circumferentially positioning each of the conductor sections (2) with respect to the stator frame (4) so that for each of said sections (2), a first conductor side (8) directly faces one of the slots, and a second conductor side (6) is disposed at a remote position with respect to the stator frame (4);
b) after the step (a), inserting each of the first conductor sides (8) into the corresponding slot; and
c) inserting each of the second conductor sides (6) into an other of said slots, which has already received a first conductor side (8) of an other conductor section (2), until all the sides (6 and 8) are mounted in said slots.

14. A method according to claim 13, characterized in that it further comprises, before the step (a), a step of forming the heads (10) of the conductor sections (2) so that each head (10) shows substantially a U-shaped body when seen from a top view perpendicular to a plane defined by the two corresponding conductor sides (6 and 8), and a waved-shape body when seen from a front view contained in this same plane.

15. A method according to claim 13, characterized in that, in the step (a), the conductor sections (2) are positioned one after the other, starting from one given point and moving sequentially along the stator frame (4).

16. A method according to claim 13, characterized in that, in the step (b), said first sides (8) of the conductor sections (2) are inserted, one after the other, starting from one given point and moving sequentially along the stator frame (4).

17. A method according to claim 13, characterized in that, in the step (c), the two conductor sides (6 and 8) of each conductor section (2) are disposed three slots away from each other.

18. A method according to claim 13, characterized in that it further comprises a step (d) of electrically connecting at least some of said conductor sections (2) in series to obtain at least one stator winding.

19. A method according to claim 18, characterized in that said step (d) comprises a step of electrically connecting said conductor sections (2) in series to obtain three separate stator windings.

20. A method for mounting conductor sections (2) of a stator winding onto a cylindrical shaped stator frame (4) of a dynamoelectric machine, each of the conductor sections (2) having two parallel conductor sides (6 and 8) and at least one conductor head (10) connecting two adjacent ends of the two parallel sides (6 and 8), said stator frame (4) being provided with circumferentially distributed parallel slots, the method being characterized in that it comprises the steps of:
a) inserting a first conductor side (8) of each conductor section (2) partially into a corresponding slot of said parallel slots;
b) positioning a second conductor side (6) of each conductor section (2), one beside the other, along the stator frame (4);
c) After the steps (a) and (b), circumferentially shifting the second conductor sides (6) with respect to the stator frame (4) until the second conductor sides (6) are aligned respectively with the first conductor sides (8) to form pairs of aligned conductor sides (6 and 8); and
d) after the step (c), applying a force onto the second conductor sides (6) along a radial direction of the stator frame (4) for inserting the pairs of aligned conductor sides (6 and 8) completely into the corresponding slots.

21. A method according to claim 20, characterized in that it further comprises, before the step (a), a step of forming the heads (10) of the conductor sections (2) so that each of the heads (10) shows substantially a U-shaped body when seen from a top view perpendicular to a plane defined by the two corresponding conductor sides (6 and 8), and a waved-shape body when seen from a front view contained in this same plane.

22. A method according to claim 20, characterized in that, in the step (c), the two conductor sides (6 and 8) of each conductor section (2) are disposed three slots away from each other.

23. A method according to claim 20, characterized in that it further comprises a step (e) of electrically connecting at least some of the conductor sections (2) in series to obtain at least one stator winding.
